# EUROPEAN PATENT APPLICATION

(11) **EP 4 471 969 A1**
(43) Date of publication of application: **04.12.2024**
(21) Application number: 23802604.1
(22) Date of filing: 19.04.2023
(51) Int. Cl.: H01M 50/528

(54) **BATTERY CELL, BATTERY AND ELECTRIC DEVICE**

(30) Priority: 13.05.2022 CN 202210521640
(71) Applicant: Contemporary Amperex Technology Co., Limited, Ningde, Fujian 352100 (CN)
(72) Inventor: CHENG, Xing, Ningde, Fujian 352100 (CN); WU, Yongbin, Ningde, Fujian 352100 (CN); SHI, Kaiyue, Ningde, Fujian 352100 (CN); JI, Yuanchun, Ningde, Fujian 352100 (CN); NIU, Shaojun, Ningde, Fujian 352100 (CN)
(74) Representative: Ziebig Hengelhaupt Intellectual Property Attorneys Patentanwaltskanzlei PartGmbB
(86) International application number: PCT/CN2023/089295
(87) International publication number: WO 2023/216829

(57) **Abstract**

The present disclosure provides a battery cell, a battery, and an electrical device, which belong to the technical field of battery. The battery cell includes a box body, an end cover, an electrode assembly, and a first current collecting member and a second current collecting member arranged separately, wherein the housing is provided with an opening; the end covers on the opening; the electrode assembly is accommodated in the housing; the electrode assembly is provided with electrode lug; the first current collecting member is connected to the electrode lug; and the second current collecting member is connected to the end cover, wherein along a thickness direction of the end cover, the first current collecting member and the second current collecting member are stacked and connected to each other; the second current collecting member is located on one side of the first current collecting member facing the end cover; and a projection of the second current collecting member is located within an outer edge of the first current collecting member. On the one hand, this battery cell can reduce a contact resistance between the first current collecting member and the electrode lug, so as to reduce the charge/discharge rate of the battery cell; and on the other hand, it can reduce a phenomenon of the localized overcurrent between the first current collecting member and the electrode lug, so as to reduce a risk of internal temperature rise in the battery cell.

## Description

### CROSS-REFERENCE TO RELATED APPLICATION

The present disclosure claims priority to Chinese patent Application No. 202210521640.1, filed with the Chinese Patent Office on May 13, 2022, entitled "BATTERY CELL, BATTERY, AND ELECTRICAL DEVICE," the entire contents of which are incorporated herein by reference.

### TECHNICAL FIELD

The present disclosure relates to the technical field of battery, and specifically relates to a battery cell, a battery, and an electrical device.

### BACKGROUND ART

In recent years, the new energy vehicle has developed rapidly. In the field of the electric vehicle, the power battery plays an irreplaceable and important role as a power source of the electric vehicle. With the vigorous promotion of the new energy vehicle, the demand for power battery products also grows increasingly. As a core component of the new energy vehicle, the battery has higher requirements in terms of the use performance and use safety. The battery cell of the battery is composed of a positive electrode plate, a negative electrode plate, and a separator, which are assembled into an electrode assembly (bare core) by winding or stacking; loaded into a housing; then covered by end covers; and finally injected with the electrolyte solution. However, the battery in the prior art has problems of poorer use performance and greater safety risk during use, which are not good for promotion and use.

### SUMMARY

The embodiments of the present disclosure provide a battery cell, a battery, and an electrical device, which can effectively improve the use performance and use safety of the battery.

In a first aspect, the embodiments of the present disclosure provide a battery cell, including a housing, an end cover, an electrode assembly, and a first current collecting member and a second current collecting member, wherein the housing is provided with an opening; the end cover covers on the opening; the electrode assembly is accommodated in the housing, and the electrode assembly is provided with an electrode lug; the first current collecting member and the second current collecting member are arranged separately; the first current collecting member is connected to the electrode lug; and the second current collecting member is connected to the electrode lug, wherein along a thickness direction of the end cover, the first current collecting member and the second current collecting member are stacked and connected to each other; the second current collecting member is located on one side of the first current collecting member facing the end cover; and a projection of the second current collecting member is located within an outer edge of the first current collecting member (i.e., an area of the second current collecting member projected on the first current collecting member is located within an outer edge of the first current collecting member).

In the above technical solution, along the thickness direction of the end covers, the first current collecting member and the second current collecting member are stacked between the electrode assembly and the end cover, and connected to each other, so that the electrode assembly can electrically connect to the end cover after the first current collecting member is connected to the electrode lug of the electrode assembly and the second current collecting member is connected to the end cover. The projection of the second current collecting member in the thickness direction of the end cover is located within the outer edge of the first current collecting member, that is to say, the area of the first current collecting member is larger than the area of the second current collecting member. It is only needed to assemble and match the second current collecting member with the end cover during the assembly process of the battery cell, so that the area size of the first current collecting member will not be limited by the end cover, which is beneficial to reduce a difficulty of connecting the first current collecting member to the electrode lug, and is beneficial to improve a connection area and connection stability between the first current collecting member and the electrode lug. On the one hand, it thus can reduce a contact resistance between the first current collecting member and the electrode lug, which is beneficial to reduce a charge/discharge rate of the battery cell, so as to improve the use performance of the battery cell; and on the other hand, it can reduce a phenomenon of the localized overcurrent between the first current collecting member and the electrode lug, which is beneficial to reduce a risk of internal temperature rise in the battery cell, so as to improve the use safety of the battery cell.

In some embodiments, an area defined by the outer edge of the first current collecting member is S₁, and an area defined by the outer edge of the second current collecting member is S₂, satisfying a condition of 0.6 ≤ S₂/S₁≤ 0.9.

In the above technical solution, a ratio of the area of the second current collecting member to the area of the first current collecting member is disposed to be 0.6 to 0.9. On the one hand, it can reduce the impact that the end cover is interfered by the second current collecting member when assembling since the area of the second current collecting member is too large, so as to improve installation convenience between the end cover and the second current collecting member; and on the other hand, it can solve the problem that a guiding area between the first current collecting member and the second current collecting member is too small since the area of the second current collecting member is too small.

In some embodiments, the first current collecting member and the second current collecting member are both circular; and the first current collecting member has an outside diameter of D₁, and the second current collecting member has an outside diameter of D₂, satisfying a condition of D₁ > D₂.

In the above technical solution, the first current collecting member and the second current collecting member are circular, which is convenient for manufacturing and beneficial to reduce the assembly difficulty.

In some embodiments, the electrode assembly includes a main body part; the electrode lug protrudes out of one end of the main body part facing the end cover; and the main body part is cylindrical, wherein an outside diameter of the main body part is D₃, satisfying a condition of 0.1mm ≤ D₃-D₁≤ 5mm, and 5mm ≤ D₃-D₂≤ 10mm.

In the above technical solution, a difference value between the diameter of the main body part of the electrode assembly and the diameter of the first current collecting member is disposed to be 0.1mm to 5mm. On the one hand, it can reduce the interference of the first current collecting member with the housing since the first current collecting member is too large; and on the other hand, it can solve the problem that the connection area between the first current collecting member and the electrode lug is insufficient since the first current collecting member is too small, so as to ensure the guiding flow area between the first current collecting member and the electrode lug. Similarly, a difference value between the diameter of the first current collecting member and the diameter of the second current collecting member is disposed to be 5mm to 10mm. On the one hand, it can reduce the impact that the end cover is interfered by the second current collecting member when assembling since the second current collecting member is too large; and on the other hand, it can solve the problem that the guiding flow area between the first current collecting member and the second current collecting member is insufficient since the second current collecting member is too small.

In some embodiments, along the thickness direction of the end cover, a surface of the first current collecting member facing the second current collecting member is provided with at least one first welding groove, and a first welding region is formed on a position of the first current collecting member where the first welding groove is arranged, wherein the first welding region is welded to the electrode lug.

In the above technical solution, the first current collecting member is provided with the first welding groove, and the first welding region welded to the electrode lug is formed at the position where the first welding groove is located. By adopting this structure, on the one hand, the first welding groove can play a role of positioning when the first current collecting member is welded to the electrode lug, which is convenient for welding and improving a welding precision; and on the other hand, it facilitates to penetrate the first current collecting member when welding, which is beneficial to ensure the welding quality.

In some embodiments, an area defined by the outer edge of the first current collecting member is S₁, and a total area of the first welding region of the first current collecting member is S₃, satisfying a condition of 0.05 ≤ S₃/S₁≤ 0.3.

In the above technical solution, a ratio of the total area of the first welding region to the area of the first current collecting member is disposed to be 0.05 to 0.3. Therefore, on the one hand, it can solve the problem that the welding area between the first current collecting member and the electrode lug is insufficient since the total area of the first welding region is too small; and on the other hand, it can solve the problem that the region of the first current collecting member connected by the second current collecting member is insufficient since the area of the first current collecting member occupied by the first welding region is too large.

In some embodiments, the first welding groove extends along a radial direction of the first current collecting member.

In the above technical solution, the first welding groove is arranged to extend along the radial direction of the first current collecting member, so that the first welding groove can pass through the first current collecting member at a center position. That is to say, the first welding region can pass through the first current collecting member at the center position, which is in turn beneficial to increase the welding area between the first current collecting member and the electrode lug.

In some embodiments, two ends of the first welding groove pass through the outer edge of the first current collecting member.

In the above technical solution, two ends of the first welding groove pass through the outer edge of the first current collecting member, so that the first welding region formed by the first welding groove can extend from the center position of the first current collecting member to the outer edge of the first current collecting member, which is in turn beneficial to ensure the welding area and the welding stability between the first current collecting member and the electrode lug, so as to improve a guiding flow effect between the first current collecting member and the electrode lug.

In some embodiments, the first current collecting member is provided with a plurality of first welding grooves, wherein the plurality of first welding grooves intersect at an intersection position, and the plurality of first welding grooves separate the first current collecting member into a plurality of main body areas, wherein the plurality of main body areas are arranged at intervals around the intersection position, and the at least one main body area is connected to the second current collecting member.

In the above technical solution, the first current collecting member is provided with the plurality of first welding grooves, and the plurality of first welding grooves intersect at one intersection position. On the one hand, the first current collecting member of this structure can further increase the welding area between the first current collecting member and the electrode lug; and on the other hand, the main body areas separated by the plurality of first welding grooves can be connected to the second current collecting member, which is beneficial to reduce a connection difficulty between the first current collecting member and the second current collecting member.

In some embodiments, the intersection position is a center position of the first current collecting member.

In the above technical solution, the plurality of first welding grooves intersect at the center position of the first current collecting member, which is beneficial to ensure that the electrode lug can be welded to the first current collecting member at different positions of the first current collecting member in the radial direction, so as to improve the welding area and the welding stability, and thus effectively improve flow guiding performance between the electrode lug and the first current collecting member.

In some embodiments, a first center hole is arranged at the intersection position, wherein the first center hole passes through two sides of the first current collecting member along the thickness direction of the end cover, and a diameter of the first center hole is equal to a groove width of the first welding groove.

In the above technical solution, the first center hole is arranged at the intersection position where the plurality of first welding grooves intersect, and the diameter of the first center hole is the same as the width of the first welding groove, so that on the one hand, it can play a certain guiding effect on the electrolyte solution, so as to improve the effect that the electrode assembly is soaked by the electrolyte solution, and on the other hand, it is beneficial to guide and discharge the gas or fume by the first center hole and the first welding groove, wherein the gas is produced in the battery cell and the fume is produced when welding, so as to improve the use performance of the battery cell.

In some embodiments, the at least one main body area is provided with a plurality of guiding flow holes, wherein the guiding flow holes pass through two sides of the first current collecting member along the thickness direction of the end cover.

In the above technical solution, the guiding flow holes are arranged on the main body area of the first current collecting member, so that the guiding flow holes can guide the electrolyte solution to enter into the electrode lug along the axial direction of the electrode assembly, which is beneficial to improve the effect that the electrode assembly is soaked by the electrolyte solution.

In some embodiments, the area defined by the outer edge of the first current collecting member is S₁, and a total area of the plurality of guiding flow holes is S₄, satisfying a condition of 0.2 ≤ S₄/S₁≤ 0.5.

In the above technical solution, a ratio of the total area of the guiding flow holes to the area of the first current collecting member is disposed to be 0.2 to 0.5. On the one hand, it can solve the problem that the guiding flow effect on the electrolyte solution is not good since the total area of the guiding flow holes is too small; and one the other hand, it can reduce the risks that a structural strength of the first current collecting member is insufficient and the welding area between the first current collecting member and the electrode lug is insufficient since the guiding flow holes occupy too much area of the first current collecting member.

In some embodiments, a pore size of the guiding flow holes is D₄, satisfying a condition of 0.1mm ≤ D₄≤ 10mm.

In the above technical solution, the pore size of the guiding flow hole is disposed to be 0.1mm to 10mm. On the one hand, it can reduce the risk that the structural strength of the first current collecting member is insufficient since the pore size of the guiding flow holes is too large; and on the other hand, it can solve the problem that the electrolyte solution is difficult to pass through the guiding flow hole since the pore size is too small.

In some embodiments, two first welding grooves are provided, and two first welding grooves separate the first current collecting member into four main body areas, wherein two opposite main body areas of the four main body areas are connected to the second current collecting member, and the other two opposite main body areas are provided with the guiding flow holes.

In the above technical solution, the first current collecting member is provided with two first welding grooves, and the two welding grooves separate the first current collecting member into four main body areas, so that the two opposite main body areas are connected to the second current collecting member, and the other two opposite main body areas are provided with the guiding flow holes. This structure is simple and easy to realize, and is beneficial to reduce a processing difficulty of the first current collecting member and the assembly difficulty of the battery cell.

In some embodiments, along the thickness direction of the end cover, a surface of the second current collecting member facing the end cover is provided with at least one second welding groove; a second welding region is formed on the second current collecting member at a position where the second welding groove is provided; and the second welding region is welded to the first current collecting member.

In the above technical solution, the second current collecting member is provided with the second welding groove, and the second welding region welded to the first current collecting member is formed at the position wherein the second welding groove is located. On the one hand, by adopting this structure, the second welding groove plays a role of positioning when the second current collecting member is welded to the first current collecting member, which facilitates the welding of the second current collecting member and the first current collecting member; and on the other hand, it is convenient for penetrating the second current collecting member when welding, which is beneficial to ensure the welding quality between the second current collecting member and the first current collecting member.

In some embodiments, along the thickness direction of the end cover, a surface of the first current collecting member facing the second current collecting member is provided with a plurality of first welding grooves; the plurality of first welding grooves intersect at a center position of the first current collecting member; and the plurality of first welding grooves separate the first current collecting member into the plurality of main body areas, wherein each second welding groove is welded to one main body area, and a projection of each second welding groove in the thickness direction of the end cover is located in a corresponding main body area (i.e., an area of each second welding groove projected on the main body area is located in the corresponding main body area).

In the above technical solution, the first current collecting member is provided with the plurality of first welding grooves, and the plurality of welding grooves separate the first current collecting member into the plurality of main body areas, wherein the main body areas can be welded to the second welding region formed by the second welding grooves on the second current collecting member, so that the projection of the second welding groove in the thickness direction of the end cover is arranged in the corresponding main body area. This structure is beneficial to reduce the connection difficulty between the first current collecting member and the second current collecting member, and can solve the problem that the second current collecting member interferes with the first welding groove of the first current collecting member when being welded to the first current collecting member.

In some embodiments, the area defined by the outer edge of the second current collecting member is S₂, and a total area of the second welding region of the second current collecting member is S₅, satisfying a condition of 0.05 ≤ S₅/S₁≤ 0.3.

In the above technical solution, the ratio of the total area of the second welding region to the area of the second current collecting member is disposed to be 0.05 to 0.3. On the one hand, it can solve the problem that the guiding flow is insufficient since the connection area between the second current collecting member and the first current collecting member is too small; and on the other hand, it can solve the problem that the connection area between the second current collecting member and the end cover is insufficient since the area occupied by the second welding region is too large.

In a second aspect, the embodiments of the present disclosure further provide a battery, including a box body and the foregoing battery cell, wherein the battery cell is accommodated in the box body.

In a third aspect, the embodiments of the present disclosure further provide an electrical device, including the foregoing battery.

### BRIEF DESCRIPTION OF DRAWINGS

In order to more clearly illustrate the technical solutions of the embodiments of the present disclosure, the drawings to be used in the embodiments will be briefly introduced below. it should be understood that the following drawings only illustrate certain embodiments of the present disclosure, and therefore should not be regarded as a limitation of the scope. For a person of ordinary skill in the art, other relevant drawings may be obtained from these drawings without inventive efforts.
FIG. 1 shows a structure schematic diagram of a vehicle provided by some embodiments of the present disclosure;
FIG. 2 shows a structure explosion diagram of a battery provided by some embodiments of the present disclosure;
FIG. 3 shows a structure explosion diagram of a battery cell provided by some embodiments of the present disclosure;
FIG. 4 shows a partial sectional diagram of a battery cell provided by some embodiments of the present disclosure;
FIG. 5 shows a connection schematic diagram of a first current collecting member and a second current collecting member provided by some embodiments of the present disclosure;
FIG. 6 shows a top view of a first current collecting member provided by some embodiments of the present disclosure;
FIG. 7 shows a top view of a second current collecting member provided by some embodiments of the present disclosure; and
FIG. 8 shows a top view of a second current collecting member connected to a first current collecting member provided by some embodiments of the present disclosure.

Reference numbers: 1000-vehicle; 100-battery; 10-box body; 11-first box body; 12-second box body; 20-battery cell; 21-housing; 211-opening; 22-end cover; 221-insulating member; 222-electrode terminal; 223-pressure relief mechanism; 23-electrode assembly; 231-electrode lug; 232-main body part; 2321-center channel; 24-first current collecting member; 241-first welding groove; 242-main body area; 243-first center hole; 244-guiding flow hole; 25-second current collecting member; 251-second center hole; 252-second welding groove; 200-controller; 300-motor; and X-thickness direction of end cover.

### DETAILED DESCRIPTION OF EMBODIMENTS

In order to make the purpose, technical solutions, and advantages of the embodiments of the present disclosure clearer, the technical solutions in the embodiments of the present disclosure will be clearly described below in conjunction with the drawings in the embodiments of the present disclosure. It is obvious that the embodiments described are partial embodiments of the present disclosure, and not all the embodiments. Based on the embodiments of the present disclosure, all the other embodiments obtained by those ordinarily skilled in the art without inventive efforts, shall fall within the scope of protection of the present disclosure.

Unless otherwise defined, all technical and scientific terms used in the present disclosure have the same meanings as commonly understood by those skilled in the art to which the present disclosure belongs. The terms used in the specification of the present disclosure are only for the purpose of describing specific embodiments, and are not intended to limit the present disclosure. The terms "comprise" and "have" and any variations of those terms in the specification and the claims and the foregoing description of drawings of the present disclosure are intended to cover a non-exclusive including. The terms, such as "first", and "second" in the specification and claims or the foregoing drawings of the present disclosure are configured to differentiate different objects, and are not used to describe a particular order or a priority relationship.

Reference to "embodiment" in the present disclosure means that particular features, structures, or characteristics described in conjunction with the embodiments can be included in at least one embodiment of the present disclosure. The phrase occurring at various positions in the specification does not necessarily all refer to the same embodiment, nor is it a separate or alternative embodiment that is mutually exclusive with other embodiments.

In the description of the present disclosure, it should be noted that unless otherwise expressly regulated and limited, the technical terms "mount", "connect", "link", and "attach", etc., are to be understood in a broad sense, e.g., it can be a fixed connection, a detachable connection, or an integral connection; it can be a direct connection, an indirect connection by an intermediate medium, or communication inside two elements. For those of ordinary skill in the art, the specific meaning of the above terms of the present disclosure can be understood in specific situations.

The term "and/or" in the present disclosure is merely an associated relationship for describing associated objects, which indicates three relationships can exist. For example, A and/or B can indicate three cases: A alone, both A and B, and B alone. Additionally, the character "/" in the present disclosure generally indicates an "or" relationship of the associated objects.

In embodiments of the present disclosure, the same reference numbers indicate the same components. For brevity, the detailed descriptions for the same components in different embodiments are omitted. It should be understood that, as shown in the drawings, the thickness, length and width, and other dimensions of various components in the embodiments of the present disclosure, and the overall thickness, length, width, and other dimensions of the integrated device are illustrative only, and should not be any limitation of the present disclosure.

As used in the present disclosure, "plurality" means more than two (including two).

In the present disclosure, the battery cell can include a lithium-ion secondary battery, a lithium-ion primary battery, a lithium-sulfur battery, a sodium-lithium-ion battery, a sodium-ion battery, or a magnesium-ion battery, etc., which is not limited by the embodiments of the present disclosure. The battery cell can be cylindrical, flat, rectangular, or other shapes, etc., which is not limited by the embodiments of the present disclosure. The battery cell is generally separated into three types according to packaging method: cylindrical battery cell, square battery cell, and soft pack battery cell, which is not limited by the embodiments of the present disclosure.

The battery referred to in embodiments of the present disclosure refers to a single physical module including one or more battery cells to provide a higher voltage and capacity. For example, the battery referred to in the present disclosure can include the battery module or battery pack, etc. The battery generally includes a box body for packaging one or more battery cells or more battery modules. The box body can prevent liquid or other foreign objects from affecting the charging or discharging of the battery cell.

The battery cell includes a housing, an electrode assembly, and an electrolyte solution, wherein the housing is configured to accommodate the electrode assembly and the electrolyte solution. The wherein the electrode assembly is consisted of a positive electrode plate, a negative electrode plate, and a separator. The battery cell works primarily on metal ions moving between the positive electrode plate and the negative electrode plate. The positive electrode plate includes a positive electrode collector and a positive electrode active substance layer, wherein the positive electrode active substance layer is coated on a surface of the positive electrode collector, and the positive electrode collector not coated with the positive electrode active substance layer is configured as a positive electrode lug, so as to realize an input or output of the electrical energy of the positive electrode plate by the positive lug. Taking the lithium-ion battery as an example, materials of the positive electrode collector can be aluminum, and the positive electrode active substance can be lithium cobaltate, lithium iron phosphate, ternary lithium, or lithium manganate, etc. The negative electrode plate includes a negative electrode collector and a negative electrode active substance layer, wherein the negative electrode active substance layer is coated on a surface of the negative electrode collector, and the negative electrode collector not coated with the negative electrode active substance layer is configured as a negative electrode lug, so as to realize an input or output of the electrical energy of the negative electrode plate by the negative lug. The material of the negative electrode collector can be copper, and the negative electrode active substance can be carbon or silicon, etc. In order to ensure that a heavy current is passed without fusing, a plurality of positive electrode lugs are provided and stacked together, and a plurality of negative electrode lugs are provided and laminated together.

The material of the separator can be PP (polypropylene) or PE (polyethylene), etc. Additionally, the electrode assembly can be of a coiling structure or a stacking structure, which is not limited by the embodiments of the present disclosure.

The battery has outstanding advantages such as higher energy density, less environmental pollution, higher power density, longer service life, wider adaptation range, and smaller self-discharge coefficient, and is an important part of the development of new energy today. The battery cell of the battery is composed of the positive electrode plate, the negative electrode plate, and the separator, which are assembled into the electrode assembly (bare core) by coiling or stacking; packaged into a housing; then covered by end covers; and finally injected with the electrolyte solution. However, with the continuous development of battery technology, it also puts forward higher demands for the use performance and use safety of the battery. Therefore, the use performance and use safety of the battery cell determine the performance and safety of the battery.

For a general battery cell, the inventor found that the electrode lug of the electrode assembly needs to be connected to the end cover, so that the electrode assembly can electrically connect to the end cover, so as to take the end cover as a positive output electrode or a negative output electrode of the battery cell. In order to facilitate the electric connection between the electrode lug of the electrode assembly and the end cover, a current collecting disk is usually arranged in the housing, wherein the current collecting disk is connected to the electrode lugs of the end cover and the electrode assembly (wherein the electrode lugs are the full electrode lugs, and are connected to the current collecting disk after kneaded), so as to realize the electric connection between the electrode assembly and the end cover. The larger feed rate of the electrode lug kneading is (i.e., the larger size that the electrode lug is kneaded and pressed down is), the larger area of the electrode lug will be. However, the larger kneading feed rate is, the more difficult the welding between the electrode lug and the current collecting disk is, and it will affect the welding stability between the electrode lug and the current collecting disk. In the prior art, a disk sleeve is sleeved on a peripheral side of the current collecting disk to ensure the electrical connection effect between the electrode assembly and the end cover. On the one hand, it can protect the current collecting disk; and on the other hand, it can enlarge a diameter of the current collecting disk, so as to ensure that the outermost electrode lug can be welded when welding. Meanwhile, the enlarged diameter can also push the welding region further to the edge of the coiling core, thereby reducing the resistance of the battery cell. However, the current collecting disk of this structure will be affected by the interference of the end cover, which will cause a smaller area of the current collecting disk, so that the welding difficulty between the current collecting disk and the electrode lug is still great, and thereby it is very easy to appear the false welding phenomenon between the current collecting disk and the electrode lug of the electrode assembly, which is not beneficial to improve the connection stability between the current collecting disk and the electrode lug. On the one hand, it will still cause a larger contact resistance between the current collecting disk and the electrode lug of the electrode assembly, so that a charge/discharge rate of the battery cell is higher, which is not beneficial to improve the use performance of the battery cell; and on the other hand, a localized overcurrent phenomenon is easy to occur between the current collecting disk and the electrode lug of the electrode assembly during use, so as to result in a risk of internal temperature rise of the battery cell, which is not beneficial to improve the use safety of the battery cell.

Based on the above considerations, in order to solve the problem that the use performance and the use safety of the battery cell are lower, after in-depth research, the inventor designs a battery cell, including the housing, end cover, electrode assembly, first current collecting member, and second current collecting member. The housing is provided with the opening; the end cover covers on the opening; the electrode assembly is accommodated in the housing; and the electrode assembly is provided with an electrode lug. The first current collecting member and the second current collecting member are arranged separately, wherein the first current collecting member is connected to the electrode lug, and the second current collecting member is connected to the end cover. Along a thickness direction of the end cover, the first current collecting member and the second current collecting member are stacked and connected to each other; the second current collecting member is located on one side of the first current collecting member facing the end cover; and a projection of the second current collecting member is located within an outer edge of the first current collecting member.

In the above battery cell, along the thickness direction of the end cover, the first current collecting member and the second current collecting member are stacked between the electrode assembly and the end cover, and connected to each other, so that the electrode assembly can electrically connect to the end covers after the first current collecting member is connected to the electrode lug of the electrode assembly and the second current collecting member is connected to the end cover. The projection of the second current collecting member in the thickness direction of the end cover is located within the outer edge of the first current collecting member, that is to say, the area of the first current collecting member is larger than the area of the second current collecting member. It is only needed to assemble and match the second current collecting member with the end cover during the assembly process of the battery cell, so that the area size of the first current collecting member will not be limited by the end cover, which is beneficial to reduce a connection difficulty between the first current collecting member and the electrode lug, and is beneficial to improve a connection area and connection stability between the first current collecting member and the electrode lug. On the one hand, it thus can reduce a contact resistance between the first current collecting member and the electrode lug, which is beneficial to reduce a charge/discharge rate of the battery cell, so as to improve the use performance of the battery cell; and on the other hand, it can reduce a phenomenon of the localized overcurrent between the first current collecting member and the electrode lug, which is beneficial to reduce a risk of internal temperature rise in the battery cell, so as to improve the use safety of the battery cell.

The battery cell disclosed by the embodiments of the present disclosure may be, but is not limited to be, used in an electrical device, such as a vehicle, a ship, or an aircraft. The battery cell, and battery, etc., disclosed by the present disclosure, can be configured to compose a power source system of the electrical device. In this way, the connection stability and reliability between the current collecting member and the electrode assembly can be effectively improved, so as to improve the use performance and the use safety of the battery cell.

The embodiments of the present disclosure provide an electrical device using the battery as the power source. The electrical device may be, but is not limited to, a cell phone, tablet computer, laptop computer, electric toy, electric tool, electric bicycle, electric vehicle, ship, spacecraft, etc. The electric toy can include a stationary or movable electric toy, such as a game console, electric car toy, electric boat toy, and electric airplane toy; and the spacecraft can include an airplane, rocket, space shuttle, and spaceship, etc.

For the sake of illustration, a vehicle 1000 is taken as an example for electrical device of one embodiment of the present disclosure.

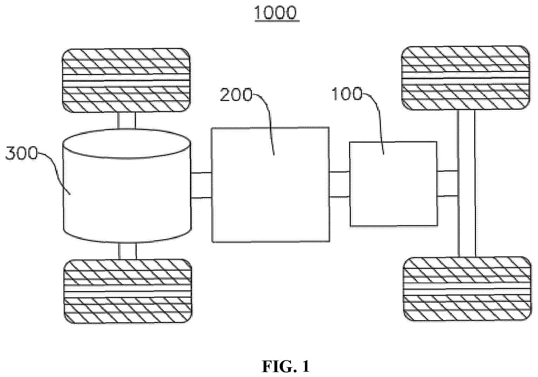

Referring to FIG. 1, FIG. 1 shows the structure schematic diagram of the vehicle 1000 provided by some embodiments of the present disclosure. The vehicle 1000 can be a fuel vehicle, gas vehicle, or new energy vehicle, wherein the new energy vehicle can be a pure electric vehicle, hybrid electric vehicle, or range extended vehicle, etc. The battery 100 is arranged inside the vehicle 1000, and the battery 100 can be arranged at the bottom or head or tail of the vehicle 1000. The battery 100 can be configured to supply power to the vehicle 1000, e.g., the battery 100 can be configured as an operating power supply of the vehicle 1000. The vehicle 1000 can further include a controller 200 and a motor 300, wherein the controller 200 is configured to control the battery 100 to supply power to the motor 300, e.g., it is configured to meet the electricity demand of the vehicle 1000 when starting, navigating, and traveling.

In some embodiments of the present disclosure, the battery 100 can not only be configured as the operating power supply of the vehicle 1000, but can also be configured as a driving power supply of the vehicle 1000, which replaces or partially replaces fuel oil or natural gas to provide a driving force for the vehicle 1000.

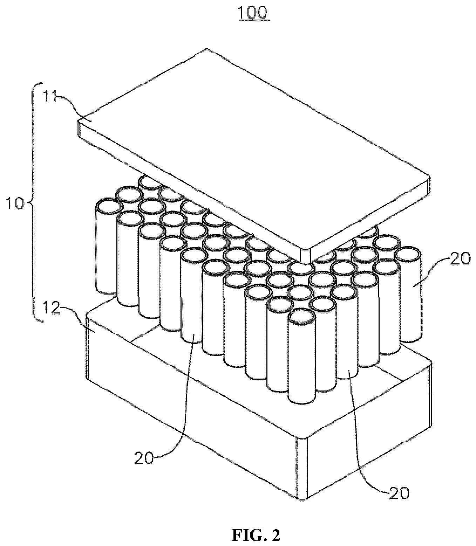

Referring to FIG. 2, FIG. 2 shows a structure explosion diagram of the battery 100 provided by some embodiments of the present disclosure. The battery 100 includes a box body 10 and a battery cell 20, wherein the battery cell 20 is accommodated in the box body 10, wherein the box body 10 is configured to provide an assembly space for the battery cell 20, and the box body 10 can be of multiple structures. In some embodiments, the box body 10 can include a first box body 11 and a second box body 12, wherein the first box 11 and the second box body 12 cover each other, and the first box 11 and the second box body 12 together define the assembly space for accommodating the battery cell 20. The second box body 12 can be a hollow structure opened at one end, and the first box body 11 can be a platy structure, wherein the first box body 11 covers on the opening side of the second box body 12, so that the first box body 11 and the second box body 12 together define the assembly space. The first box body 11 and the second box body 12 can both be hollow structures opened at one sides, wherein the opening side of the first box body 11 covers on the opening side of the second box body 12. Of course, the box body 10 formed by the first box body 11 and the second box body 12 can be of multiple shapes, such as a cylinder, and a cuboid.

In the battery 100, a plurality of battery cells 20 are provided, and the plurality of battery cells 20 can be connected in series or in parallel or in hybrid, wherein the hybrid connection means that the plurality of battery cells 20 are both connected in series and in parallel. The plurality of battery cells 20 can be directly connected together in series or in parallel or in hybrid, and then the whole constituted by the plurality of battery cells 20 is accommodated in the box body 10. Of course, the battery 100 can also be that the plurality of battery cells 20 are firstly connected in series or in parallel or hybrid to form a battery module, and the plurality of battery modules are then connected in series or in parallel or hybrid to form a whole, which is accommodated in the box body 10. The battery 100 can further include other structures, e.g., the battery 100 can further include an assembled component for realizing the electrical connection between the plurality of battery cells 20.

Each battery cell 20 can be a secondary battery or primary battery, and can also be a lithium-sulfur battery, sodium-ion battery, or magnesium-ion battery, but is not limited thereto. The battery cell 20 can be cylindrical, flat, rectangular, or of other shapes, etc. For example, in FIG. 2, the battery cells 20 are cylindrical.

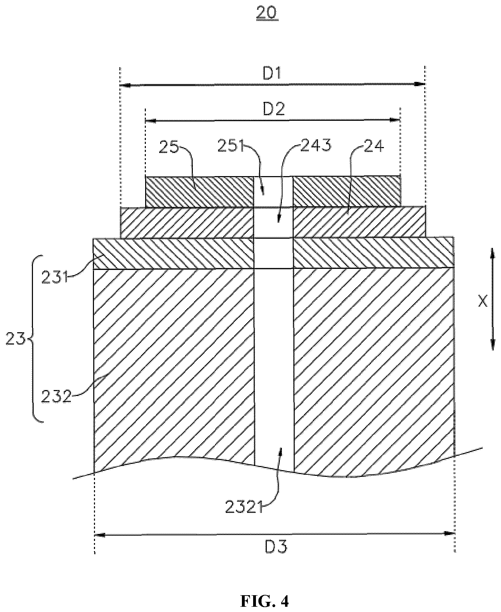

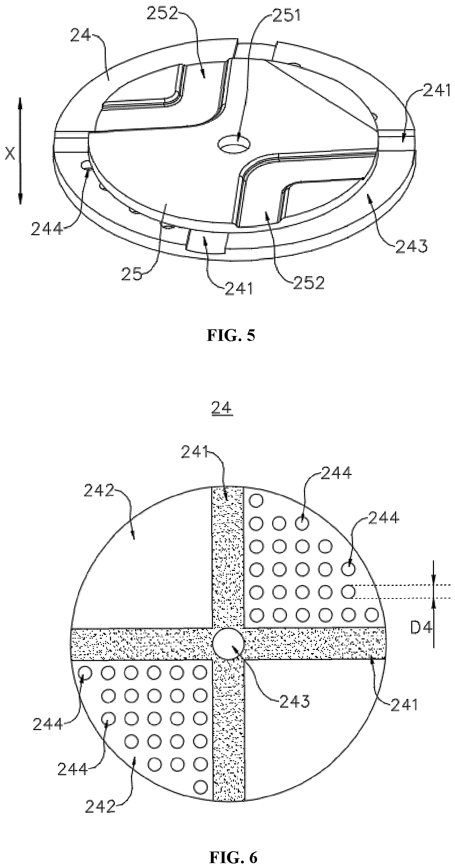

According to some embodiments of the present disclosure, referring to FIG. 3, FIG. 4, and FIG. 5, FIG. 3 shows a structure explosion diagram of the battery cell 20 provided by some embodiments of the present disclosure; FIG. 4 shows a structure explosion diagram of the current collecting member provided by some embodiments of the present disclosure; and FIG. 5 shows a connection schematic diagram of a first current collecting member 24 and a second current collecting member 25 provided by some embodiments of the present disclosure. The present disclosure provides a battery cell 20, wherein the battery cell 20 includes a housing 21, an end cover 22, an electrode assembly 23, a first current collecting member 24, and a second current collecting member 25, wherein the housing 21 is provided with an opening 211; the end cover 22 covers the opening 211; the electrode assembly 23 is accommodated in the housing 21; the electrode assembly 23 is provided with an electrode lug 231; and the first current collecting member 24 and the second current collecting member 25 are arranged separately, wherein the first current collecting member 24 is connected to the electrode lug 231, and the second current collecting member 25 is connected to the end cover 22. Along a thickness direction X of the end cover, the first current collecting member 24 and the second current collecting member 25 are stacked and connected to each other; the second current collecting member 25 is located on one side of the first current collecting member 24 facing the end cover 22; and a projection of the second current collecting member 25 is located within an outer edge of the first current collecting member 24.

Along the thickness direction X of the end cover, the first current collecting member 24 and the second current collecting member 25 are stacked and connected to each other, and the second current collecting member 25 is located on one side of the first current collecting member 24 facing the end cover 22. That is to say, the first current collecting member 24 and the second current collecting member 25 are overlapped between the electrode assembly 23 and the end cover 22 along the thickness direction X of the end cover, and the first current collecting member 24 is arranged farther away from the end cover 22 than the second current collecting member 25.

The projection of the second current collecting member 25 is located in the outer edge of the first current collecting member 24, i.e. along the thickness direction X of the end cover, the projection of the second current collecting member 25 falls within a region defined by the outer edge of the first current collecting member 24. That is to say, the area of the second current collecting member 25 is smaller than that of the first current collecting member 24.

Optionally, the connection relationships between the first current collecting member 24 and the electrode lug 231, between the first current collecting member 24 and the second current collecting member 25, and between the second current collecting member 25 and the end cover 22 can be abutting connections or welding connections. For example, in this embodiment, the connection relationships between the first current collecting member 24 and the electrode lug 231, between the first current collecting member 24 and the second current collecting member 25, and between the second current collecting member 25 and the end cover 22 are the welding connections.

For example, the first current collecting member 24 and the second current collecting member 25 can also be made of multiple materials, such as copper, nickel, or aluminum. The thickness of the first current collecting member 24 and the thickness of the second current collecting member 25 are 0.1mm to 5mm.

Optionally, the housing 21 can also be used to accommodate an electrolyte, such as an electrolyte solution. The housing body 21 can be of a plurality of structures. The housing body 21 also be made of multiple materials, such as copper, iron, aluminum, steel, and aluminum alloy.

When assembling the battery cell 20, the electrode assembly 23 can be placed into the housing 21 first, and the housing 21 can be filled with the electrolyte; and then the end cover 22 can be covered on the opening 211 of the housing 21 to form a sealing connection, which forms the sealing space for accommodating the electrode assembly 23 and the electrolyte. For example, the end cover 22 is welded on the housing 21.

The end cover 22 is provided with an insulating member 221, and the insulating member 221 is located on one side of the end cover 22 facing the electrode assembly 23. During the assembly of the battery cell 20, the insulating member 221 is configured to wrap around the outer peripheral side of the second current collecting member 25 when the end cover 22 covers on the opening 211 of the housing 21, so as to play roles of insulating protection and installation positioning for the second current collecting member 25. For example, the insulating member 221 can be made of rubber, plastic, or silicone, etc.

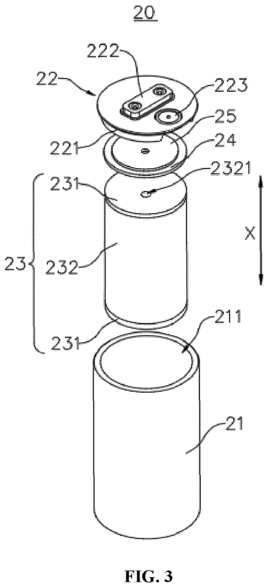

The housing body 21 can be of multiple shapes, such as cylinder, or cuboid. The shape of the housing 21 can be determined according to the specific shape of the electrode assembly 23. For example, if the electrode assembly 23 is cylindrical, it may be selected as a cylindrical structure; and if the electrode assembly 23 is rectangular, it may be selected as a rectangular structure. For example, in FIG. 3, the electrode assembly 23 is cylindrical, and the housing 21 is a cylindrical housing 21.

For example, in FIG. 3, the housing 21 is a hollow structure with an opening 211 at one end, and the end cover 22 covers on the opening 211 of the housing 21 to form the sealing connection, so as to form the sealing space for accommodating the electrode assembly 23 and the electrolyte solution. The end cover 22 is provided with electrode terminals 222, wherein the electrode terminals 222 are connected to the end cover 22 in an insulation method, i.e., no current passes through the electrode terminal 222 and the end cover 22. The electrode assembly 23 is provided with electrode lugs 231 (they are a positive electrode lug and a negative electrode lug respectively) at two ends in the thickness direction X of the end cover, wherein the two electrode lugs 231 are respectively connected to the electrode terminals 222 and one end of the housing 21 away from the end cover 22, so as to be configured as a positive output electrode and a negative output electrode of the battery cell 20. Of course, the electrode lugs 231 and the electrode terminals 222 or the housing 21 can be connected directly, such as connected by welding or abutting; or can be connected by other components, for example, the electrode lugs 231 are first welded with or abutted against other components, and then connected to the electrode terminals 222 or the housing 21.

Along the thickness direction X of the end cover, the electrode lug 231 at one end of the electrode assembly 23 facing the end cover 22 is connected to the first current collecting member 24, and the second current collecting member 25 is connected to the electrode terminals 222 of the end cover 22. It is noted that the second current collecting member 25 can be directly connected to the electrode terminals 222 of the end cover 22, for example, the second current collecting member 25 is directly welded with or abutted against the electrode terminals 222, so as to realize the electrical connection between the second current collecting member 25 and the electrode terminals 222. Of course, the second current collecting member 25 can also be indirectly connected to the electrode terminals 222 of the end cover 22, for example, after the second current collecting member 25 is welded with or abutted against an adapter plate, then the adapter piece is welded or abutted against the electrode terminals 222.

It is to be understood that the battery cell 20 is not limited to the foregoing structure. The battery cell 20 can also be of other structures, for example, the battery cell 20 includes the housing 21 and two end covers 22, wherein the housing 21 is a hollow structure with opposite openings 211 at two ends, wherein one end cover 22 correspondingly covers on one opening 211 of the housing 21 to form the sealing connection, so as to form the sealing space for accommodating the electrode assembly 23 and the electrolyte solution. In the embodiment that the housing 21 is the hollow structure with openings 211 at two ends, two end covers 22 are provided with electrode terminals 222, wherein the two electrode terminals 222 are configured to connect to two electrode lugs 231 of the electrode assembly 23 respectively, so as to be configured as the positive output electrode and the negative output electrode of the battery cell 20. Additionally, in the battery cell 20 of this structure, the first current collecting member 24 and the second current collecting member 25 can be only arranged between one end cover 22 and the electrode assembly 23, or the first current collecting members 24 and the second current collecting members 25 can be arranged between each end cover 22 and the electrode assembly 23. The embodiments of the present disclosure will not be limited herein.

It is to be noted that the electrode assembly 23 is a component in the battery cell 20 that an electrochemical reaction occurs. The electrode assembly 23 may include a positive electrode plate, a negative electrode plate, and a separator. The electrode assembly 23 can be of a wound structure formed by winding the positive electrode plate, the separator, and the negative electrode plate, or a layer structure formed by stacking the positive electrode plate, the separator, and the negative electrode plate. For example, in FIG. 3, the electrode assembly 23 is of the wound structure formed by winding the positive electrode plate, the separator, and the negative electrode plate.

In some embodiments, in FIG. 3, the battery cell 20 can further include a pressure relief mechanism 223, wherein the pressure relief mechanism 223 is mounted on the end cover 22, and also can be mounted on the housing 21. The pressure relief mechanism 223 is configured to relieve pressure inside the battery cell 20 when the internal pressure or temperature of the battery cell 20 reaches a preset value.

For example, the pressure relief mechanism 223 can be components such as an explosion-proof valve, explosion-proof plate, air valve, pressure relief valve, or safety valve.

Along the thickness direction X of the end cover, the first current collecting member 24 and the second current collecting member 25 are stacked between the electrode assembly 23 and the end cover 22, and connected to each other, so that the electrode assembly 23 can electrically connect to the end cover 22 after the first current collecting member 24 is connected to the electrode lug 231 of the electrode assembly 23 and the second current collecting member 25 is connected to the end cover 22. The projection of the second current collecting member 25 in the thickness direction X of the end cover is located within the outer edge of the first current collecting member 24, that is to say, the area of the first current collecting member 24 is larger than the area of the second current collecting member 25. It is only needed to assemble and match the second current collecting member 25 with the end cover 22 during the assembly process of the battery cell 20, so that the area size of the first current collecting member 24 will not be limited by the end cover 22, which is beneficial to reduce the connection difficulty between the first current collecting member 24 and the electrode lug 231, and is beneficial to improve the connection area and connection stability between the first current collecting member 24 and the electrode lug 231. On the one hand, it thus can reduce the contact resistance between the first current collecting member 24 and the electrode lug 231, which is beneficial to reduce the charge/discharge rate of the battery cell 20, so as to improve the use performance of the battery cell 20; and on the other hand, it can reduce the phenomenon of the localized overcurrent between the first current collecting member 24 and the electrode lug 231, which is beneficial to reduce the risk of internal temperature rise in the battery cell 20, so as to improve the use safety of the battery cell 20.

According to some embodiments of the present disclosure, an area defined by the outer edge of the first current collecting member 24 is S₁, and an area defined by the outer edge of the second current collecting member 25 is S₂, satisfying a condition of 0.6 ≤ S₂/S₁≤ 0.9.

The condition of 0.6 ≤ S₂/S₁≤ 0.9 means that in the thickness direction X of the end cover, a ratio of the area of the region defined by the projection of the second current collecting member 25 to the area of the region defined by the projection of the first current collecting member 24 is 60% to 90%.

The ratio of the area of the second current collecting member 25 to the area of the first current collecting member 24 is disposed to be 0.6 to 0.9, so that on the one hand, it can reduce the impact that the end cover 22 is interfered by the second current collecting member 25 when assembling since the area of the second current collecting member 25 is too large, so as to improve an installation convenience between the end cover 22 and the second current collecting member 25; and on the other hand, it can solve the problem that the guiding area between the first current collecting member 24 and the second current collecting member 25 is too small since the area of the second current collecting member 25 is too small.

According to some embodiments of the present disclosure, referring to FIG. 4 and FIG. 5, the first current collecting member 24 and second current collecting member 25 are both circular, wherein the first current collecting member 24 has an outside diameter of D₁, and the second current collecting member 25 has an outside diameter of D₂, satisfying a condition of D₁ > D₂.

The first current collecting member 24 and the second current collecting member 25 are both in circular disk structures. Of course, in other embodiments, the first current collecting member 24 and the second current collecting member 25 can be of other structures, such as ellipse, rectangle, or triangle.

The first current collecting member 24 and the second current collecting member 25 are both circular, which is convenient for manufacturing and beneficial to reduce the assembly difficulty.

According to some embodiments of the present disclosure, referring to FIG. 3 and FIG. 4, the electrode assembly 23 includes the main body part 232, and the electrode lug 231 protrudes out of one end of the main body part 232 facing the end cover 22, wherein the main body part 232 is a cylinder. The outside diameter of the body part 232 is D₃, satisfying a condition of 0.1mm ≤ D₃-D₁≤ 5mm, and 5mm ≤ D₃-D₂≤ 10mm.

The condition of 0.1mm ≤ D₃-D₁≤ 5mm means that the diameter of the first current collecting member 24 is smaller than the diameter of the main body part 232 by 0.1mm to 5mm, and the condition of 5mm ≤ D₃-D₂≤ 10mm means that the diameter of the second current collecting member 25 is smaller than the diameter of the first current collecting member 24 by 5mm to 10mm.

Optionally, two ends of the main body part 232 are provided with the electrode lugs 231, and the electrode lugs 231 located on two ends of the main body part 232 are separately configured to connect to the electrode terminals 222 on the end cover 22 and the housing 21, so as to realize the input or output of electrical energy of the battery cell 20.

It should be noted that the electrode lug 231 is kneaded on one end of the main body part 232, so that the electrode lug 231 protrudes out of one end of the main body part 232. The kneaded electrode lug 231 is in a cylindrical structure, and the diameter of the kneaded electrode lug 231 is equal to the diameter of the main body part 232.

A difference value between the diameter of the main body part 232 of the electrode assembly 23 and the diameter of the first current collecting member 24 is disposed to be 0.1mm to 5mm. On the one hand, it can reduce the interference of the first current collecting member 24 with the housing 21 since the first current collecting member 24 is too large; and on the other hand, it can solve the problem that the connection area between the first current collecting member 24 and the electrode lug 231 is insufficient since the first current collecting member 24 is too small, so as to ensure the guiding flow area between the first current collecting member 24 and the electrode lug 231. Similarly, a difference value between the diameter of the first current collecting member 24 and the diameter of the second current collecting member 25 is disposed to be 5mm to 10mm. On the one hand, it can reduce the impact that the end cover 22 is interfered by the second current collecting member 25 when assembling since the second current collecting member 25 is too large; and on the other hand, it can solve the problem that the guiding flow area between the first current collecting member 24 and the second current collecting member 25 is insufficient since the second current collecting member 25 is too small.

According to some embodiments of the present disclosure, referring to FIG. 4 and FIG. 5, and further referring to FIG. 6, FIG. 6 shows a top view of the first current collecting member 24 provided by some embodiments of the present disclosure. Along the thickness direction X of the end cover, a surface of the second current collecting member 24 facing the second current collecting member 25 is provided with at least one first welding groove 241, and a first welding region is formed on a position of the first current collecting member 24 where the first welding groove 241 is arranged, wherein first welding region is welded to electrode lug 231.

The first welding region is formed on the position of the first current collecting member 24 where the first welding groove 241 is arranged, i.e., the first current collecting member 24 is welded to the electrode lug 231 at the position where the first welding groove 241 is located. That is to say, a groove bottom wall of the first welding groove 241 is welded to the electrode lug 231, and the groove bottom wall of the first welding groove 241 is the first welding region.

A groove width of the first welding groove 241 is 2mm to 10mm, and a groove depth of the first welding groove 241 is 0.1mm to 3mm.

The first current collecting member 24 is provided with the first welding groove 241, and the first welding region welded to the electrode lug 231 is formed at the position where the first welding groove 241 is located. By adopting this structure, on the one hand, the first welding groove 241 can play a role of positioning when the first current collecting member 24 is welded to the electrode lug 231, which is convenient for welding and improving a welding precision; and on the other hand, it facilitates to penetrate the first current collecting member 24 when welding, so as to ensure the welding quality.

According to some embodiments of the present disclosure, referring to FIG. 6, the area defined by the outer edge of the first current collecting member 24 is S₁, the total area of the first welding region of the first current collecting member 24 is S₃, satisfying a condition of 0.05 ≤ S₃/S₁≤ 0.3.

The condition of 0.05 ≤ S₃/S₁≤ 0.3 means that the area of the first current collecting member 24 occupied by the first welding groove 241 is 5% to 30%.

A ratio of the total area of the first welding region to the area of the first current collecting member 24 is disposed to be 0.05 to 0.3. Therefore, on the one hand, it can solve the problem that the welding area between the first current collecting member 24 and the electrode lug 231 is insufficient since the total area of the first welding region is too small; and on the other hand, it can solve the problem that the region of the first current collecting member 24 connected by the second current collecting member 25 is insufficient since the area of the first current collecting member 24 occupied by the first welding region is too large.

According to some embodiments of the present disclosure, referring to FIG. 6, the first welding groove 241 extends along the radial direction of the first current collecting member 24.

The radial direction of the first current collecting member 24 refers to a direction from the center position of the first current collecting member 24 towards the edge of the first current collecting member 24, or from the edge of the first current collecting member 24 towards the center position of the first current collecting member 24. That is to say, the radial direction of the first current collecting member 24 passes through the first current collecting member 24 at the center position, and is perpendicular to the thickness direction X of the end cover.

In some embodiments, two ends of the first welding groove 241 both pass through the outer edge of the first current collecting member 24. That is to say, the first welding groove 241 extends from the center position of the first current collecting member 24 to the outer edge of the first current collecting member 24. Two ends of the first welding groove 241 both pass through the outer edge of the first current collecting member 24, so that the first welding region formed by the first welding groove 241 can extend from the center position of the first current collecting member 24 to the outer edge of the first current collecting member 24, which is in turn beneficial to ensure the welding area and the welding stability between the first current collecting member 24 and the electrode lug 231, so as to improve the guiding flow effect between the first current collecting member 24 and the electrode lug 231.

The first welding groove 241 is arranged to extend along the radial direction of the first current collecting member 24, so that the first welding groove 241 can pass through the first current collecting member 24 at its center position. That is to say, the first welding region can pass through the first current collecting member 24 at the center position, which is in turn beneficial to increase the welding area between the first current collecting member 24 and the electrode lug 231.

According to some embodiments of the present disclosure, referring to FIG. 6, the first current collecting member 24 is provided with a plurality of first welding grooves 241, wherein the plurality of first welding grooves 241 intersect at an intersection position, and the plurality of first welding grooves 241 separate the first current collecting member 24 into a plurality of main body areas 242, wherein the plurality of main body areas 242 are arranged at intervals around the intersection position, and at least one main body area 242 is connected to the second current collecting member 25.

The plurality of first welding grooves 241 intersect at the intersection position, that is to say, the first current collecting member 24 is provided with the plurality of first welding grooves 241 at one side facing the second current collecting member 25 in the thickness direction X of the end cover, and the plurality of welding grooves intersect at one intersection point. The intersection point is the intersection position, so that one side of the first current collecting member 24 facing the second current collecting member 25 in the thickness direction X of the end cover is separated into a plurality of regions, i.e., the main body areas 242, and the plurality of main body areas 242 are arranged around the intersection position of the plurality of first welding grooves 241.

For example, in FIG. 6, two first welding grooves 241 are provided, and the two welding grooves are perpendicular to each other. Of course, in other embodiments, the number of the first welding grooves 241 may also be three, four, or five, etc., and angles between the multiple welding grooves may be other angles, such as 60 degrees, 70 degrees, or 80 degrees.

The first current collecting member 24 is provided with the plurality of first welding grooves 241, and the plurality of first welding grooves 241 intersect at one intersection position. On the one hand, the first current collecting member 24 of this structure can further increase the welding region between the first current collecting member 24 and the electrode lug 231; and on the other hand, the main body areas 242 separated by the plurality of first welding grooves 241 can be connected to the second current collecting member 25, which is beneficial to reduce the connection difficulty between the first current collecting member 24 and the second current collecting member 25.

According to some embodiments of the present disclosure, referring to FIG. 6, the intersection position is the center position of the first current collecting member 24.

The intersection position is the center position of the first current collecting member 24, i.e., the plurality of first welding grooves 241 extend along the radial direction of the first current collecting member 24, so that the plurality first welding groove 241 intersect at the center position of the first current collecting member 24.

In some embodiments, a first center hole 243 is arranged at the intersection position. wherein the first center hole 243 passes through two sides of the first current collecting member 24 along the thickness direction X of the end cover, and a diameter of the first center hole 243 is equal to the groove width of the first welding groove 241. The first center hole 243 is arranged at the intersection position where the plurality of first welding grooves 241 intersect, and the diameter of the first center hole 243 is the same as the width of the first welding groove 241, so that on the one hand, it can play a certain guiding effect on the electrolyte solution, so as to improve the effect that the electrode assembly 23 is soaked by the electrolyte solution; and on the other hand, it is beneficial to guide and discharge the gas or fume by the first center hole 243 and the first welding groove 241, wherein the gas is produced in the battery cell and the fume is produced when welding, so as to improve the use performance of the battery cell 20.

Optionally, in FIG. 4, a center channel 2321 is arranged inside the electrode assembly 23, and the center channel 2321 passes through two ends of the electrode assembly 23 along the thickness direction X of the end cover, wherein the center channel 2321 is arranged on the main body part 232 of the electrode assembly 23 and passes through the electrode lugs 231 located on two ends of the main body part 232. A second center hole 251 is arranged at the center position of the second current collecting member 25, and the second center hole 251 passes through two sides of the second current collecting member 25 along the thickness direction X of the end cover, wherein the center channel 2321, the first center hole 243, and the second center hole 251 are all communicated to facilitate venting and entry of the electrolyte solution.

The plurality of first welding grooves 241 intersect at the center position of the first current collecting member 24, which is beneficial to ensure that the electrode lug can 231 be welded to the first current collecting member 24 at different positions of the first current collecting member 24 in the radial direction, so as to improve the welding area and the welding stability, and thus effectively improve the guiding flow performance between the electrode lug 231 and the first current collecting member 24.

According to some embodiments of the present disclosure, referring to FIG. 6, at least one main body area 242 is provided with a plurality of guiding flow holes 244, and the guiding flow holes 244 pass through two sides of the first current collecting member 24 along the thickness direction X of the end cover.

The at least one main body area 242 is provided with the plurality of guiding flow holes 244, i.e., at least one region of the first current collecting member 24 separated by the first welding groove 241 is provided with the guiding flow hole 244.

Optionally, the area defined by the outer edge of the first current collecting member 24 is S₁, and the total area of the plurality of guiding flow holes 244 is S₄, satisfying a condition of 0.2 ≤ S₄/S₁≤ 0.5. That is to say, the area of the first current collecting member 24 occupied by the plurality of guiding flow holes 244 is 20% to 50%.

A ratio of the total area of the guiding flow holes 244 to the area of the first current collecting member 24 is disposed to be 0.2 to 0.5. On the one hand, it can solve the problem that the guiding flow effect on the electrolyte solution is not good since the total area of the guiding flow holes 244 is too small; and on the other hand, it can reduce the risk that the structural strength of the first current collecting member 24 is insufficient and the welding area between the first current collecting member 24 and the electrode lug 231 is insufficient since the guiding flow hole 244 occupies too much area of the first current collecting member 24.

A pore size diameter of the guiding flow hole 244 is D₄, satisfying a condition of 0.1mm ≤ D₄≤ 10mm. The pore size 244 of the guiding flow hole is disposed to be 0.1mm to 10mm. On the one hand, it can reduce the risk that the structural strength of the first current collecting member 24 is insufficient since the pore size of the guiding flow hole 244 is too large; and on the other hand, it can solve the problem that the electrolyte solution is difficult to pass through the guiding flow hole 244 since the pore size is too small.

In some embodiments, referring to FIG. 6, two first welding grooves 241 are provided, and two first welding grooves 241 separate the first current collecting member 24 into four main body areas 242, wherein two opposite main body areas 242 of the four main body areas 242 are connected to second current collecting member 25, and the other two opposite main body areas 242 are provided with the guiding flow holes 244.

The first current collecting member 24 is provided with two first welding grooves 241, and the two welding grooves separate the first current collecting member 24 into four main body areas 242, so that two opposite main body areas 242 are connected to the second current collecting member 25, and the other two opposite main body areas 242 are provided with the guiding flow holes 244. This structure is simple and easy to realize, and is beneficial to reduce the processing difficulty of the first current collecting member 24 and the assembly difficulty of the battery cell 20.

For example, two first welding grooves 241 are perpendicular to each other, and two first welding grooves 241 both extend along the radial direction along the first current collecting member 24.

The guiding flow holes 244 are arranged on the main body areas 242 of the first current collecting member 24, so that the guiding flow holes 244 can guide the electrolyte solution to enter into the electrode lug 231 along the axial direction of the electrode assembly 23, which is beneficial to improve the effect that the electrode assembly 23 is soaked by the electrolyte solution.

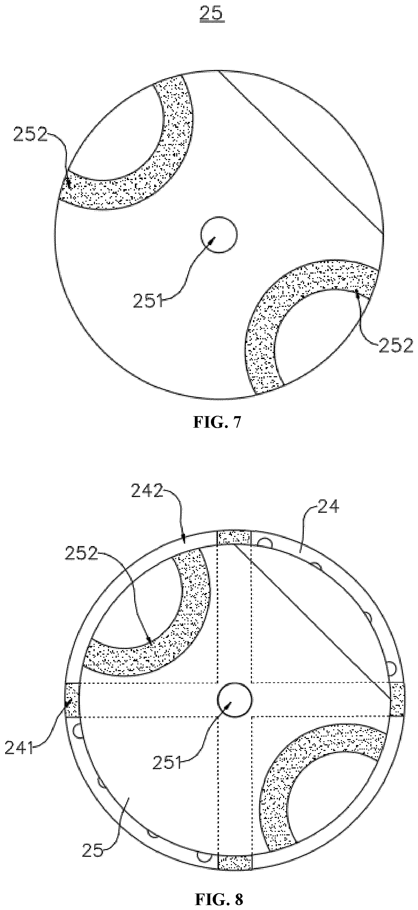

According to some embodiments of the present disclosure, referring to FIG. 4 and FIG. 5, and further referring to FIG. 7, FIG. 7 shows a top view of the second current collecting member 25 provided by some embodiments of the present disclosure. Along the thickness direction X of the end cover, a surface of the second current collecting member 25 facing the end cover 22 is provided with at least one second welding groove 252, and the second welding region is formed on the position of the second current collecting member 25 where the second welding groove 252 is arranged, wherein the second welding region is welded to the first current collecting member 24.

The second welding region is formed on the position of the second current collecting member 25 where the second welding groove 252 is arranged i.e., the second current collecting member 25 is welded to the first current collecting member 24 at the position where the second welding groove 252 is located. That is to say, a groove bottom wall of the second welding groove 252 is welded to the electrode lug 24; the groove bottom wall of the second welding groove 252 is the second welding region; and the groove bottom wall of the second welding groove 252 is welded to the main body area 242 of the first current collecting member 24 without the guiding pore size 244, so that the second current collecting member 25 is connected to the first current collecting member 24.

For example, the second welding groove 252 is in a circular arc structure. In FIG. 7, two second welding grooves 252 are provided, wherein two second welding grooves 252 are arranged at intervals surrounding the center position of the second current collecting member 25 (the second center hole 251), and two ends of the second welding grooves 252 both extend to the outer edge of the second current collecting member 25. Of course, in other embodiments, the number of second welding grooves 252 arranged on the second current collecting member 25 may also be three, four, or five, etc.

Optionally, a length of the second welding groove 252 is 20mm to 200mm; the groove width of the second welding groove 252 is 3mm to 10mm; and the groove depth of the second welding grooves 252 is 0.1mm to 3mm.

The second current collecting member 25 is provided with the second welding groove 252, and the second welding region welded to the first current collecting member 24 is formed at the position where the second welding groove 252 is located. On the one hand, by adopting this structure, the second welding groove 252 plays a role of positioning when the second current collecting member 25 is welded with the first current collecting member 24, which facilitates the welding of the second current collecting member 25 and the first current collecting member 24; and on the other hand, it is convenient for penetrating the second current collecting member 25 when welding, which is beneficial to ensure the welding quality between the second current collecting member 25 and the first current collecting member 24.

According to some embodiments of the present disclosure, referring to FIG. 6 and FIG. 7, and referring further to FIG. 8, FIG. 8 shows a top view of the second current collecting member 25 connected to the first current collecting member 24 provided by some embodiments of the present disclosure. Along the thickness direction X of the end cover, the surface of the first current collecting member 24 facing second current collecting member 25 is provided with the plurality of first welding grooves 241, wherein the plurality of first welding grooves 241 intersect at the center position of the current collecting member 24, and the plurality of first welding grooves 241 separate the first current collecting member 24 into the plurality of main body areas 242, wherein each second welding region is welded to one main body area 242, and the projection of the second welding groove 252 in the thickness direction X of the end cover is located within the corresponding main body area 242.

The projection of each second welding groove 252 in the thickness direction X of the end cover is located within the corresponding main body area 242, i.e., the region defined by the projection of one second welding groove 252 in the thickness direction X of the end cover falls within one corresponding main body area 242.

For example, the first current collecting member 24 is provided with two first welding grooves 241, and the two first welding grooves 241 separate the first current collecting member 24 into four main body areas 242. Similarly, the second current collecting member 25 is provided with two second welding grooves 252, and the two second welding grooves 252 are symmetrically arranged at the center position of the second current collecting member 25, so that the groove bottom walls (the second weld regions) of two second welding grooves 252 can be welded to two opposite main body areas 242 of the four main body areas 242.

In some embodiments, an area defined by the outer edge of the second current collecting member 25 is S₂, and a total area of the second welding region of the second current collecting member 25 is S₅, satisfying a condition of 0.05 ≤ S₅/S₂≤ 0.3. That is to say, the area of the second current collecting member 25 occupied by the second welding groove 252 is 5% to 30%. A ratio of the total area of the second welding region to the area of the second current collecting member 25 is disposed to be 0.05 to 0.3. On the one hand, it can solve the problem that the guiding flow is insufficient since the connection area between the second current collecting member 25 and the first current collecting member 24 is too small; and on the other hand, it can solve the problem that connection area between the second current collecting member 25 and the end cover 22 is insufficient since the area occupied by the second welding region is too large.

The first current collecting member 24 is provided with the plurality of first welding grooves 241, and the plurality of welding grooves separate the first current collecting member 24 into the plurality of main body areas 242, wherein the main body areas 242 can be welded to the second welding region formed by the second welding grooves 252 on the second current collecting member 25, so that the projection of the second welding groove 252 in the thickness direction X of the end cover is arranged in the corresponding main body area 242, which is beneficial to reduce the connection difficulty between the second current collecting member 25 and the first current collecting member 24, and can solve the problem that the second current collecting member 25 interferes with the first welding groove 241 of the first current collecting member 24 when being welded to the first current collecting member 24.

According to some embodiments of the present disclosure, the embodiments of the present disclosure further provide a battery 100, wherein the battery 100 includes a box body 10 and the battery cell 20 of any of the above solutions, and the battery cell 20 is accommodated in the box body 10.

According to some embodiments of the present disclosure, the embodiments of the present disclosure further provide an electrical device, including the battery 100 of any of the above solutions, and the battery 100 is used to provide electrical energy for the electrical device.

The electrical device may be the device or system applying the battery 100 in any of the foregoing embodiments.

According to some embodiments of the present disclosure, referring to FIG. 3 to FIG. 8, the present disclosure provides a battery cell 20, wherein the battery cell 20 includes the housing 21, the end cover 22, the electrode assembly 23, and the first current collecting member 24 and the second current collecting member 25 that are arranged separately. The housing 21 is provided with the opening 211; the end cover 22 covers on the opening 211; the electrode assembly 23 is accommodated in the housing 21; and one end of the electrode assembly 23 is provided with the electrode lug 231 in the thickness direction X of the end cover. The first current collecting member 24 is connected to the electrode lug 231, and the second current collecting member 25 is connected to the end cover 22. Along the thickness direction X of the end cover, the first current collecting member 24 and the second current collecting member 25 are stacked and connected to each other; the second current collecting member 25 is located on one side of the first current collecting member 24 facing the end cover 22; and the projection of the second current collecting member 25 is located within the outer edge of the first current collecting member 24. The first current collecting member 24 and the second current collecting member 25 are both circulars. The electrode assembly 23 includes the main body part 232; the electrode lug 231 protrudes out of one end of the main body part 232 facing end cover 22; the main body part 232 is cylindrical; and the main body part 232 has an outside diameter of D₃, satisfying a condition of 0.1mm ≤ D₃-D₁≤ 5mm, and 5mm ≤ D₃-D₂≤ 10mm. Along the thickness direction X of the end cover, the surface of the first current collecting member 24 facing the second current collecting member 25 is provided with two first welding grooves 241, and the first welding region is formed on the position of the first current collecting member 24 where the first welding groove 241 is arranged, wherein first welding region is welded to electrode lug 231. Two first welding grooves 241 extend along the radial direction of the first collector member 24 and pass through the outer edge of the first collector member 24. The two first welding grooves 241 are perpendicular to each other and intersect at the center position of the first collector member 24, so that the first collector member 24 can be separated into four main body areas 242, wherein two opposite main body areas 242 of the four main body areas 242 are connected to second current collecting member 25, and the other two opposite main body areas 242 are provided with the guiding flow holes 244.

It is to be noted that the embodiments and the features in the embodiments of the present disclosure may be combined with each other without conflict.

The above are only preferred embodiments of the present disclosure, and are not intended to limit the present disclosure. For those skilled in the art, the present disclosure can be made of various changes and variations. Any modifications, equivalent substitutions, improvements, etc., made within the spirit and principles of the present disclosure shall be included in the scope of protection of the present disclosure.

## Claims

1. A battery cell, comprising:
a housing, provided with an opening;
an end cover, covering on the opening;
an electrode assembly, accommodated in the housing, wherein the electrode assembly is provided with an electrode lug; and
a first current collecting member and a second current collecting member arranged separately, wherein the first current collecting member is connected to the electrode lug, and the second current collecting member is connected to the end cover, wherein
along a thickness direction of the end cover, the first current collecting member and the second current collecting member are stacked and connected to each other; the second current collecting member is located on one side of the first current collecting member facing the end cover; and a projection of the second current collecting member is located within an outer edge of the first current collecting member.

2. The battery cell according to claim 1, wherein an area defined by the outer edge of the first current collecting member is S₁, and an area defined by an outer edge of the second current collecting member is S₂, satisfying a condition of 0.6 ≤ S₂/S₁≤ 0.9.

3. The battery cell according to claim 1 or 2, wherein the first current collecting member and the second current collecting member are both circular; and
the first current collecting member has an outside diameter of D₁, and the second current collecting member has an outside diameter of D₂, satisfying a condition of D₁> D₂.

4. The battery cell according to claim 3, wherein the electrode assembly comprises a main body part; the electrode lug protrudes out of one end of the main body part facing the end cover; and the main body part is cylindrical, wherein
an outside diameter of the main body part is D₃, satisfying a condition of 0.1mm ≤ D₃-D₁≤ 5mm, and 5mm ≤ D₃-D₂≤ 10mm.

5. The battery cell according to any one of claims 1-4, wherein along the thickness direction of the end cover, a surface of the first current collecting member facing the second current collecting member is provided with at least one first welding groove, and a first welding region is formed on a position of the first current collecting member where the first welding groove is arranged, wherein the first welding region is welded to the electrode lug.

6. The battery cell according to claim 5, wherein an area defined by the outer edge of the first current collecting member is S₁, and a total area of the first welding region of the first current collecting member is S₃, satisfying a condition of 0.05 ≤ S₃/S₁≤ 0.3.

7. The battery cell according to claim 5 or 6, wherein the first welding groove extends along a radial direction of the first current collecting member.

8. The battery cell according to claim 7, wherein two ends of the first welding groove pass through the outer edge of the first current collecting member.

9. The battery cell according to any one of claims 5-8, wherein the first current collecting member is provided with a plurality of first welding grooves, wherein the plurality of first welding grooves intersect at an intersection position, and the plurality of first welding grooves separate the first current collecting member into a plurality of main body areas, wherein the plurality of main body areas are arranged at intervals around the intersection position, and at least one of the main body areas is connected to the second current collecting member.

10. The battery cell according to claim 9, wherein the intersection position is a center position of the first current collecting member.

11. The battery cell according to claim 10, wherein a first center hole is arranged at the intersection position, wherein the first center hole passes through two sides of the first current collecting member along the thickness direction of the end cover, and a diameter of the first center hole is equal to a groove width of the first welding groove.

12. The battery cell according to any one of claims 9-11, wherein the at least one of the main body areas is provided with a plurality of guiding flow holes, wherein the guiding flow holes pass through two sides of the first current collecting member along the thickness direction of the end cover.

13. The battery cell according to claim 12, wherein an area defined by the outer edge of the first current collecting member is S₁, and a total area of the plurality of guiding flow holes is S₄, satisfying a condition of 0.2 ≤ S₄/S₁≤ 0.5.

14. The battery cell according to claim 12 or 13, wherein a pore size of the guiding flow holes is D₄, satisfying a condition of 0.1mm ≤ D₄≤ 10mm.

15. The battery cell according to any one of claims 12-14, wherein two first welding grooves are provided, and the two first welding grooves separate the first current collecting member into four main body areas, wherein two opposite main body areas of the four main body areas are connected to the second current collecting member, and the other two opposite main body areas are provided with the guiding flow holes.

16. The battery cell according to any one of claims 1-15, wherein along the thickness direction of the end cover, a surface of the second current collecting member facing the end cover is provided with at least one second welding groove; a second welding region is formed on the second current collecting member at a position where the second welding groove is arranged; and the second welding region is welded to the first current collecting member.

17. The battery cell according to claim 16, wherein along the thickness direction of the end cover, a surface of the first current collecting member facing the second current collecting member is provided with a plurality of first welding grooves; the plurality of first welding grooves intersect at a center position of the first current collecting member; and the plurality of first welding grooves separate the first current collecting member into a plurality of main body areas, wherein
each second welding groove is welded to one of the main body areas, and a projection of each second welding groove in the thickness direction of the end cover is located in a corresponding main body area.

18. The battery cell according to claim 16 or 17, wherein an area defined by an outer edge of the second current collecting member is S₂, and a total area of the second welding region of the second current collecting member is S₅, satisfying a condition of 0.05 ≤ S₅/S₁≤ 0.3.

19. A battery, comprising:
a box body; and
the battery cell according to any one of claims 1-18, wherein the battery cell is accommodated in the box body.

20. An electrical device, comprising the battery according to claim 19.
